# EUROPÄISCHE PATENTANMELDUNG

(11) **EP 4 556 777 A1**
(43) Veröffentlichungstag der Anmeldung: **21.05.2025**
(21) Anmeldenummer: 24203682.0
(22) Anmeldetag: 30.09.2024
(51) Int. Cl.: F16L 55/128, F16L 55/38, F16L 55/44

(54) **FLUIDVERDRÄNGUNGSMOLCH UND VERDRÄNGUNGSVERFAHREN**

(30) Priorität: 14.11.2023 DE 102023131623
(71) Anmelder: Westnetz GmbH, 44139 Dortmund (DE)
(72) Erfinder: Becher, Simon, 48599 Gronau (DE); Niebialek, Sascha, 45894 Gelsenkirchen (DE)
(74) Vertreter: Bals & Vogel Patentanwälte PartGmbB

(57) **Zusammenfassung**

Die Erfindung betrifft ein Fluidverdrängungsmolch (10) zum Verdrängen (204) von einem Fluid (F) in einer Rohrleitung (150) und zum Abdichten des Fluidverdrängungsmolchs (10) gegen die Rohrleitung (150), der Fluidverdrängungsmolch (10) umfassend einen Grundkörper (20), eine zumindest abschnittsweise aufblasbare Dichtvorrichtung (30) zum Abdichten des Fluidverdrängungsmolchs (10) gegen die Rohrleitung (150) und eine Speichervorrichtung (60), wobei die Speichervorrichtung (60) zur Speicherung eines Dichtfluids (A) ausgestaltet ist und wobei der Fluidverdrängungsmolch (10) zum Aufblasen (202) der Dichtvorrichtung (30) mit dem Dichtfluid (A) aus der Speichervorrichtung (60) ausgestaltet ist. Die Erfindung betrifft ferner ein Verdrängungsverfahren (200) zum Verdrängen (204) von einem Fluid (F) in einer Rohrleitung (150) durch einen Fluidverdrängungsmolch (10) und zum Abdichten des Fluidverdrängungsmolchs (10) gegen die Rohrleitung (150).

## Beschreibung

Die vorliegende Erfindung betrifft einen Fluidverdrängungsmolch zum Verdrängen von einem Fluid in einer Rohrleitung und zum Abdichten des Fluidverdrängungsmolchs gegen die Rohrleitung.

Die derzeitig öffentlich bekannten Molche werden für eine Vielzahl an Funktionen im Bereich der Wartung und dem Betrieb innerhalb von Rohrleitungen, insbesondere Verteilnetzleitungen, verwendet. Im Rahmen der In- und Außerbetriebnahme von Gasleitungen, insbesondere Gasleitungen, die als Wasserstoffgasleitungen betrieben werden oder betrieben werden sollen, sind geänderte technische Gegebenheiten zu berücksichtigen. Insbesondere die brenntechnischen Eigenschaften von Wasserstoff, wie ein vergrößerter Zündbereich und/oder eine geringere Zündenergie in Relation zu Methan, macht es zumeist erforderlich, neue Vorgehensweisen bei in den In- und Außerbetriebnahmen zu entwickeln, damit es nicht zu ungewollten Entzündungen von Wasserstoff-Luftgemischen während einer In- und/oder Außerbetriebnahme einer Leitung kommt und die Umweltaspekte berücksichtigt werden.

Bekannte Molchvorrichtungen werden beispielsweise zur Reinigung, zur Trocknung oder zur Inspizierung von Rohrleitungen genutzt. Für das beispielhafte Szenario eines Fluidwechsels in einer Rohrleitung, insbesondere einen Fluidwechsel der Rohrleitung auf Wasserstoff, ist im bekannten Stand der Technik zumeist eine Spülung der Leitung mit einem Inertgas notwendig, um Reinheits- und Sicherheitsanforderungen für den Betrieb der Rohrleitungen zu erfüllen. Auch nach Neubau-, Austausch- und/oder Wartungsarbeiten an Rohrleitungen und einem anschließenden zumindest abschnittsweisen Befüllen oder Neubefüllen der Rohrleitungen ist zumeist eine Verdrängung von Luft und/oder Wasser aus der Rohrleitung mittels Hilfsfluiden wie einem Inertgas üblich, bevor die Rohrleitung mit dem eigentlichen Versorgungsmedium geflutet wird.

Für die Inbetriebnahme, die Wiederinbetriebnahme und/oder einen Fluidwechsel von langen Rohrleitungsabschnitten ist dabei nachteilig eine entsprechend große Menge an Spülgasen, wie beispielsweise Inertgasen, notwendig, was einen großen Kosten-, Zeit- und Logistikaufwand erfordert.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, einen Fluidverdrängungsmolch und ein Verdrängungsverfahren bereitzustellen, mit denen ein Verdrängen von einem Fluid in einer Rohrleitung und zum Abdichten des Fluidverdrängungsmolchs gegen die Rohrleitung besonders einfach ermöglicht wird.

Die voranstehende Aufgabe wird durch die Patentansprüche gelöst. Insbesondere wird die Aufgabe gelöst durch einen Fluidverdrängungsmolch zum Verdrängen von einem Fluid in einer Rohrleitung und zum Abdichten des Fluidverdrängungsmolchs gegen die Rohrleitung mit den Merkmalen des unabhängigen Anspruchs 1. Ferner wird die Aufgabe gelöst durch ein Verdrängungsverfahren mit den Merkmalen des unabhängigen Anspruchs 12. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Fluidverdrängungsmolch beschrieben sind, selbstverständlich auch im Zusammenhang mit dem erfindungsgemäßen Verdrängungsverfahren und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch einen Fluidverdrängungsmolch zum Verdrängen von einem Fluid in einer Rohrleitung und zum Abdichten des Fluidverdrängungsmolchs gegen die Rohrleitung. Der Fluidverdrängungsmolch umfasst einen Grundkörper, eine zumindest abschnittsweise aufblasbare Dichtvorrichtung zum Abdichten des Fluidverdrängungsmolchs gegen die Rohrleitung und eine Speichervorrichtung, wobei die Speichervorrichtung zur Speicherung eines Dichtfluids ausgestaltet ist und wobei der Fluidverdrängungsmolch zum Aufblasen der Dichtvorrichtung mit dem Dichtfluid aus der Speichervorrichtung ausgestaltet ist.

Der Kern der Idee des Fluidverdrängungsmolchs ist es, durch den Fluidverdrängungsmolch eine fluiddichte Trennung innerhalb der Rohrleitung zwischen dem Rohrleitungsraum vor und hinter dem Fluidverdrängungsmolch zu erzeugen. Dafür wird der Fluidverdrängungsmolch in die Rohrleitung eingebracht und dichtet durch die zumindest abschnittsweise aufblasbare Dichtvorrichtung den Fluidverdrängungsmolch, insbesondere den Grundkörper, gegen die Rohrleitung ab. Für das Abdichten durch die Dichtvorrichtung wird aus der Speichervorrichtung Dichtfluid in die Dichtvorrichtung gefördert.

Die Speichervorrichtung ist bevorzugt fluidkommunizierend mit der Dichtvorrichtung verbunden, um das Dichtfluid in die Dichtvorrichtung zu fördern. Die Speichervorrichtung ist bevorzugt innerhalb des Grundkörpers des Fluidverdrängungsmolchs ausgestaltet. Die Dichtvorrichtung ist bevorzugt als zumindest abschnittsweise aufblasbare Vorrichtung, beispielsweise als aufblasbare Polstervorrichtung, als aufblasbare Fluidvorrichtung und/oder als aufblasbarer Schlauch ausgestaltet.

Die Rohrleitung ist im Rahmen der Erfindung bevorzugt als Verteilnetzleitung, beispielsweise im Sinne von einer Erdgasleitung und/oder einer bisher als Erdgasleitung genutzten Rohrleitung, zu verstehen.

Anschaulich und bespielhaft beschrieben, ermöglicht der erfindungsgemäße Fluidverdrängungsmolch einen Fluidwechsel in einer Rohrleitung von Methan zu Wasserstoff. Eine Vermischung von beispielsweise Methan und Wasserstoff oder Sauerstoff und Wasserstoff ist aufgrund von Reinheitsanforderungen und/oder des großen Zündbereichs eines daraus entstehenden Gemisches unbedingt zu vermeiden. Für den beispielhaften Fluidwechsel von Methan zu Wasserstoff ohne eine zwischenzeitige Entleerung und/oder Spülung der Rohrleitung wird der Fluidverdrängungsmolch in die Rohrleitung eingesetzt und mit dem Dichtfluid, insbesondere einem Inertgas wie Stickstoff, durch die Dichtvorrichtung gegen die Rohrleitung abgedichtet. Dafür wird der beispielhafte Stickstoff als Dichtfluid aus der Speichervorrichtung durch den Fluidverdrängungsmolch zum Aufblasen der Dichtvorrichtung verwendet. Somit wird vorteilhaft durch den Fluidverdrängungsmolch eine Abdichtung der Rohrleitung vor dem Fluidverdrängungsmolch gegen die Rohleitung hinter dem Fluidverdrängungsmolch ermöglicht und mit dem beispielhaften Stickstoff ein vorteilhaftes Inertgas zur Abdichtung verwendet. Der Fluidverdrängungsmolch verhindert somit vorteilhaft eine Vermengung von dem Wasserstoff in dem Rohrleitungsraum hinter dem Fluidverdrängungsmolch und dem Methan in dem Rohrleitungsraum vor dem Fluidverdrängungsmolch. Die Verwendung von dem Stickstoff als Inertgas zum Aufblasen der Dichtvorrichtung verhindert vorteilhaft eine Vermischung von Wasserstoff mit einem unvorteilhaften Gas, wie beispielsweise Sauerstoff, in einem Leckage- und/oder Undichtigkeits-Szenario der Dichtvorrichtung. Der Fluidverdrängungsmolch wird in der Praxis für die Flutung der Leitung mit Wasserstoff bevorzugt durch den Druck des flutenden Wasserstoffs innerhalb der Rohrleitung vorangetrieben.

Die zumindest eine Speichervorrichtung ist als Speichertank und/oder als Speichervorrichtung zur chemischen Bindung des Dichtfluids ausgestaltet. Eine Speicherung des Dichtfluids in der Speichervorrichtung erfolgt bevorzugt gasförmig oder flüssig.

Ein derart ausgestalteter Fluidverdrängungsmolch ist besonders vorteilhaft, da ein Verdrängen von einem Fluid in der Rohrleitung und ein Abdichten des Fluidverdrängungsmolchs gegen die Rohrleitung besonders einfach ermöglicht wird. Der Fluidverdrängungsmolch ermöglicht die erfindungsgemäße Funktion der Trennung der Medien vor und hinter dem Fluidverdrängungsmolch in der Rohrleitung und bedient sich für die Abdichtung der Rohrleitung vorteilhaft dem Dichtfluid aus der Speichervorrichtung. Durch die Verwendung des Dichtfluids zum Aufblasen der Dichtvorrichtung wird beispielsweise eine Einhaltung von sicherheitsrelevanten Vorgaben für den Betrieb einer Rohrleitung gewährleistet.

Gemäß einer bevorzugten Weiterentwicklung der Erfindung kann bei einem Fluidverdrängungsmolch vorgesehen sein, dass die Dichtvorrichtung umlaufend an dem Grundkörper angeordnet ist und/oder zumindest abschnittsweise in einer Nut des Grundkörpers angeordnet ist. Eine Abdichtung des Fluidverdrängungsmolchs, insbesondere des Grundkörpers, gegen die Rohrleitung erfolgt besonders vorteilhaft, wenn die Dichtvorrichtung umlaufend an dem Grundkörper angeordnet ist und/oder zumindest abschnittsweise in einer Nut des Grundkörpers angeordnet ist. Die Anordnung der Dichtvorrichtung zumindest abschnittsweise in einer Nut des Grundkörpers ermöglicht vorteilhaft eine Positionsstabilität der Dichtvorrichtung sowie eine vorteilhafte Vergrößerung der Dichtvorrichtung ohne einen Spalt zwischen dem Grundkörper und der Rohrleitung zu vergrößern. Die umlaufende Ausgestaltung der Dichtvorrichtung ermöglicht vorteilhaft eine entsprechende umlaufende Abdichtung durch die Dichtvorrichtung und somit eine vorteilhafte Fluidtrennung innerhalb der Rohrleitung. Ein derart ausgestalteter Fluidverdrängungsmolch ist besonders vorteilhaft, da durch die Ausgestaltung der Dichtvorrichtung ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch zumindest zwei zumindest abschnittsweise aufblasbare Dichtvorrichtungen umfasst, wobei die zumindest zwei Dichtvorrichtungen durch den Fluidverdrängungsmolch mit dem Dichtfluid aus der Speichervorrichtung aufblasbar sind und/oder wobei die zumindest zwei Dichtvorrichtungen axial nebeneinander angeordnet sind. Eine zweifache und/oder redundante Ausführung der zumindest abschnittsweise aufblasbare Dichtvorrichtung ermöglicht eine besonders vorteilhafte Abdichtung des Fluidverdrängungsmolchs gegen die Rohrleitung. Bevorzugt sind die zwei Dichtvorrichtungen axial, also entlang einer Achse der Rohrleitung und/oder des Fluidverdrängungsmolchs zueinander verschoben angeordnet, sodass eine doppelte Abdichtung, insbesondere hintereinander, in der Rohrleitung durch den Fluidverdrängungsmolch ermöglicht wird. Neben der erhöhten Abdichtung und der verbesserten Abdichtung bei beispielsweise einer Beschädigung einer der Dichtvorrichtungen, ist eine zumindest doppelte Ausgestaltung der Dichtvorrichtung besonders vorteilhaft für Abzweigungen innerhalb der Rohrleitung. Durch die zumindest zwei Dichtvorrichtungen wird bevorzugt eine Abdichtung des Fluidverdrängungsmolchs gegen die Rohrleitung auch dann ermöglicht, wenn die Rohrleitung eine Abzweigung aufweist. Bevorzugt sind die zumindest zwei Dichtvorrichtungen dafür derart zueinander beabstandet, dass ein branchenüblicher Durchmesser einer Abzweigung berücksichtigt wird und eine Abdichtung des Fluidverdrängungsmolchs gegen die Rohrleitung gewährleistet ist. Ein derart ausgestalteter Fluidverdrängungsmolch ist besonders vorteilhaft, da durch die Ausgestaltung der zumindest zwei Dichtvorrichtungen ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch zumindest ein Dichtelement umfasst, wobei das Dichtelement nicht aufblasbar, umlaufend an und/oder in dem Grundkörper und/oder mechanisch ausgestaltet ist. Das zumindest eine Dichtelement ist bevorzugt als Dichtlippe und/oder als Dichtprofil ausgestaltet und/oder ist im Gegensatz zur Dichtvorrichtung eben nicht aufblasbar ausgestaltet. Das zumindest eine Dichtelement erfüllt eine zusätzliche Dichtfunktion zu der Dichtvorrichtung und ist insbesondere auch bei beispielsweise einer Beschädigung der Speichervorrichtung, einer Verstopfung von Leitungen des Fluidverdrängungsmolchs und/oder einem Energieverlust funktionsfähig und ermöglicht bevorzugt eine zumindest grundsätzliche Abdichtung des Fluidverdrängungsmolchs gegen die Rohrleitung. Ein derart ausgestalteter Fluidverdrängungsmolch ist besonders vorteilhaft, da durch das zumindest eine Dichtelement ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch eine Mediumfördervorrichtung umfasst, wobei die Mediumfördervorrichtung zur Förderung von dem Dichtfluid aus der und/oder in die Speichervorrichtung ausgestaltet ist und/oder wobei die Mediumfördervorrichtung zum Aufblasen der Dichtvorrichtung mit dem Dichtfluid aus der Speichervorrichtung ausgestaltet ist. Die Mediumfördervorrichtung ist bevorzugt als Verdichtervorrichtung und/oder Pumpenvorrichtung ausgestaltet. Die Mediumfördervorrichtung ist aktiv oder passiv ausgestaltet. Eine aktive Mediumfördervorrichtung ermöglicht eine Förderung des Dichtfluids durch beispielsweise einen elektrischen Antrieb und/oder bewegte Fördervorrichtungen der Mediumfördervorrichtung. Eine passive Mediumfördervorrichtung ermöglicht bevorzugt eine Förderung des Dichtfluids ohne bewegte Bauteile, beispielsweise in Form einer Strahlpumpe. Die Mediumfördervorrichtung ist bevorzugt mit der Speichervorrichtung und/oder der zumindest abschnittsweise aufblasbare Dichtvorrichtung fluidkommunizierend verbunden. Die Mediumfördervorrichtung ist bevorzugt innerhalb des Grundkörpers des Fluidverdrängungsmolchs ausgestaltet. Ein derart ausgestalteter Fluidverdrängungsmolch ist besonders vorteilhaft, da durch die Mediumfördervorrichtung ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch eine Separationsvorrichtung umfasst, wobei die Separationsvorrichtung zum Separieren von einem Medium aus der Rohrleitung ausgestaltet ist und/oder zumindest eine Separationseinheit zum Separieren des Mediums aus der Rohrleitung in zumindest zwei Medium-Bestandteile umfasst, insbesondere wobei ein Medium-Bestandteil dem Dichtfluid entspricht.

Bevorzugt ist im Rahmen der Erfindung die Separationsvorrichtung fluidkommunizierend mit der Speichervorrichtung verbunden, insbesondere um einen Medium-Bestandteil der Speichervorrichtung zuzuführen. Anschaulich beschrieben ermöglicht die Separationsvorrichtung bevorzugt ein Befüllen der Speichervorrichtung durch einen Medium-Bestandteil aus dem Medium in der Rohrleitung. Das Medium in der Rohrleitung entspricht dem zu verdrängenden Fluid vor dem Fluidverdrängungsmolch oder dem flutenden Fluid hinter dem Fluidverdrängungsmolch.

Der zweite Medium-Bestandteil oder die restlichen Medium-Bestandteile werden bevorzugt aus der Separationsvorrichtung und/oder dem Fluidverdrängungsmolch ausgeschieden und/oder durch weitere Speichervorrichtungen gespeichert, wobei diese Speichervorrichtungen nicht zum Aufblasen der Dichtvorrichtung verwendet werden. Ein Ausscheiden der zweiten Medium-Bestandteile oder der restlichen Medium-Bestandteile erfolgt bevorzugt in den Rohrleitungsraum vor dem Separationsmolch, also bevorzugt in den Rohrleitungsraum, aus dem das Medium entnommen wurde. Mit anderen Worten werden die zweiten Medium-Bestandteile oder die restlichen Medium-Bestandteile bevorzugt nach vorne aus dem Separationsmolch ausgeschieden.

Die Medium-Bestandteile des Mediums sind bevorzugt als einzelne Gase oder als GasGemische zu verstehen. Die Medium-Bestandteile werden im Rahmen der Erfindung durch die Separationsvorrichtung aus dem Medium in der Rohrleitung separiert. Besonders bevorzugt ist der erfindungsgemäße Fluidverdrängungsmolch für das voranstehend beschriebene Beispiel mit Stickstoff oder einem anderen Inertgas als Medium-Bestandteil für das Aufblasen der zumindest abschnittsweise aufblasbaren Dichtvorrichtung.

Die zumindest eine Separationseinheit ist bevorzugt austauschbar in und/oder an der Separationsvorrichtung angeordnet und/oder befestigt. Bevorzugt umfasst die Separationsvorrichtung eine Erfassungseinheit zur Erfassung eines Zustands der zumindest einen Separationseinheit. Optional umfasst die Separationsvorrichtung und/oder der Fluidverdrängungsmolch eine Anzeigevorrichtung zur Anzeige des Zustands der zumindest einen Separationseinheit und/oder eine Schnittstelle zur Ausgabe des Zustands der zumindest einen Separationseinheit. Bevorzugt ist die Separationseinheit als Separationsmembran ausgestaltet. Ein derart ausgestalteter Fluidverdrängungsmolch ist besonders vorteilhaft, da durch die Separationsvorrichtung und/oder die zumindest eine Separationseinheit ein Separieren von dem Medium in einer Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch zumindest zwei Grundkörper umfasst, wobei jeder der zumindest zwei Grundkörper zumindest eine zumindest abschnittsweise aufblasbare Dichtvorrichtung zur Abdichtung des Fluidverdrängungsmolchs gegen die Rohrleitung umfasst, wobei jeder Grundkörper eine Speichervorrichtung umfasst oder wobei die zumindest zwei Grundkörper eine gemeinsame Speichervorrichtung umfassen, wobei die Dichtvorrichtungen jeweils mit der zumindest einen Speichervorrichtung verbunden sind.

Bevorzugt umfasst jeder der Grundkörper jeweils zumindest zwei Dichtvorrichtungen, insbesondere wobei die zumindest zwei Dichtvorrichtungen axial hintereinander an und/oder um den jeweiligen Grundkörper angeordnet sind. Der Fluidverdrängungsmolch mit zumindest zwei Grundkörpern weist eine oder mehrere Speichervorrichtungen auf. Bevorzugt weist der Fluidverdrängungsmolch mit zumindest zwei Grundkörper lediglich in einem Grundkörper eine Speichervorrichtung auf. Die Speichervorrichtung ist jeweils mit den Dichtvorrichtungen der Grundkörper fluidkommunizierend verbunden. Die Grundkörper und/oder die Verbindung der Grundkörper sind bevorzugt zumindest abschnittsweise modular ausgestaltet, sodass eine Verbindung von mehreren Grundkörpern vorteilhaft ermöglicht ist. Die Verwendung von zumindest zwei Grundkörpern ermöglicht vorteilhaft die Abdichtung von zuvor bereits beschriebenen Abzweigungen innerhalb der Rohrleitung. Durch die zumindest zwei Grundkörper mit jeweils zumindest einer Dichtvorrichtungen wird bevorzugt eine Abdichtung des Fluidverdrängungsmolchs gegen die Rohrleitung auch dann ermöglicht, wenn die Rohrleitung eine Abzweigung aufweist. Ein derart ausgestalteter Fluidverdrängungsmolch ist besonders vorteilhaft, da durch die zumindest zwei Grundkörper ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass die zumindest zwei Grundkörper mit zumindest einer Verbindungsvorrichtung miteinander beweglich verbunden sind. Die Verbindungsvorrichtung ist bevorzugt als Gelenkvorrichtung und/oder als flexible Verbindungsvorrichtung ausgestaltet. Die Verbindungvorrichtung weist bevorzugt eine Leitungs- und/oder Kabelführung, insbesondere im Inneren der Verbindungsvorrichtung zur vorteilhaften Verbindung der zumindest zwei Grundkörper auf. Die Verbindungsvorrichtung ermöglicht bevorzugt eine Beweglichkeit, insbesondere in zumindest oder genau zwei Raumebenen, der zumindest zwei Grundkörper zueinander und ermöglicht somit folglich eine vorteilhafte Verwendung des Fluidverdrängungsmolchs auch für gebogene Abschnitte einer Rohrleitung. Ein derart ausgestalteter Fluidverdrängungsmolch ist besonders vorteilhaft, da durch die zumindest zwei Grundkörper und die Verbindungvorrichtung ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch zumindest eine Sensorvorrichtung umfasst, wobei die Sensorvorrichtung zur Erfassung zumindest eines Messwerts innerhalb der Rohrleitung ausgestaltet ist. Die Sensorvorrichtung umfasst bevorzugt zumindest einen Gaserfassungs-Sensor zur Erfassung von Gas, von Gasen, von Gaskonzentrationen und/oder von Gas-Bestandteilen. Bevorzugt ist die zumindest eine Sensorvorrichtung zwischen zwei Dichtvorrichtungen, insbesondere zwischen zwei Dichtvorrichtungen eines Grundkörpers, angeordnet, um eine Funktionsfähigkeit und Abdichtung der Dichtvorrichtungen zu überprüfen. Alternativ oder zusätzlich ist die zumindest eine Sensorvorrichtung stirnseitig vor und/oder hinter dem Grundkörper angeordnet, um beispielsweise eine Gaszusammenstellung vor und/oder hinter dem Fluidverdrängungsmolch zu erfassen. Die zumindest eine Sensorvorrichtung umfasst bevorzugt eine Schnittstelle zur Ausgabe, Fernübertragung und/oder Bereitstellung der erfassten Daten und/oder eine Anzeigevorrichtung zur Anzeige der erfassten Daten. Alternativ oder zusätzlich umfasst die Sensorvorrichtung eine Speichervorrichtung zur Speicherung der erfassten Daten. Ein derart ausgestalteter Fluidverdrängungsmolch ist besonders vorteilhaft, da durch die zumindest eine Sensorvorrichtung ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch zumindest eine Energievorrichtung umfasst, wobei die Energievorrichtung zur Speicherung und/oder zur Bereitstellung von Energie an den Fluidverdrängungsmolch ausgestaltet ist. Die Energievorrichtung kann eine aufladbare Energiequelle umfassen und/oder beispielsweise als Brennstoffzelle ausgestaltet sein. Bevorzugt ist die zumindest eine Energievorrichtung fluidkommunizierend mit der Rohrleitung vor und/oder hinter dem Fluidverdrängungsmolch verbunden, beispielsweise über zumindest eine Treibstoffschnittstelle, bevorzugt an einer Stirnseite des Fluidverdrängungsmolchs. Die zumindest eine Energievorrichtung versorgt bevorzugt die beschriebene Mediumfördervorrichtung und/oder andere Vorrichtungen des Fluidverdrängungsmolchs. Ein derart ausgestalteter Fluidverdrängungsmolch ist besonders vorteilhaft, da durch die zumindest eine Energievorrichtung ein Verdrängen von einem Fluid in der Rohrleitung und ein Abdichten des Fluidverdrängungsmolchs gegen die Rohrleitung besonders einfach ermöglicht wird.

Gemäß einer bevorzugten Weiterentwicklung der Erfindung kann bei einem Fluidverdrängungsmolch vorgesehen sein, dass der Fluidverdrängungsmolch, insbesondere der Grundkörper, die Dichtvorrichtung und/oder das Dichtelement, eine Gleitvorrichtung und/oder eine Führungsvorrichtung zum Gleiten und/oder Führen des Fluidverdrängungsmolchs innerhalb der Rohrleitung umfasst. Die Gleitvorrichtung ist bevorzugt als Oberflächenbeschichtung, als Gleitmaterial und/oder als Gleitfilm an und/oder auf dem Grundkörper, der Dichtvorrichtung und/oder dem Dichtelement ausgestaltet. Die Gleitvorrichtung ermöglicht vorteilhaft die Bewegung des Fluidverdrängungsmolchs durch die Rohrleitung bei gleichzeitig vorteilhafter Abdichtung des Fluidverdrängungsmolchs gegen die Rohrleitung. Der Fluidverdrängungsmolch wird beispielsweise mit 3 bis 7 m/s durch die Rohrleitung bewegt. Die Bewegung des Fluidverdrängungsmolchs erfolgt bevorzugt durch einen Gasdruck hinter dem Fluidverdrängungsmolch. Eine vorteilhafte Ausgestaltung des Fluidverdrängungsmolchs mit zumindest einer Gleitvorrichtung ermöglicht somit eine gute Abdichtung im Betrieb des Fluidverdrängungsmolchs und ferner bevorzugt eine geringe Abnutzung der beschriebenen Vorrichtungen im Kontakt mit der Rohrleitung und somit eine verlängerte Lebenszeit und/oder geringere Wartungskosten. Ein derart ausgestalteter Fluidverdrängungsmolch ist besonders vorteilhaft, da durch die zumindest eine Gleitvorrichtung ein Verdrängen von einem Fluid in der Rohrleitung und ein Abdichten des Fluidverdrängungsmolchs gegen die Rohrleitung besonders einfach ermöglicht wird.

Gemäß einem zweiten Aspekt der Erfindung wird die Aufgabe durch ein Verdrängungsverfahren zum Verdrängen von einem Fluid in einer Rohrleitung durch einen Fluidverdrängungsmolch und zum Abdichten des Fluidverdrängungsmolchs gegen die Rohrleitung gelöst. Das Verdrängungsverfahren umfasst:
- Aufblasen einer zumindest abschnittsweise aufblasbaren Dichtvorrichtung des Fluidverdrängungsmolchs mit einem Dichtfluid aus einer Speichervorrichtung des Fluidverdrängungsmolchs zum Abdichten gegen die Rohrleitung durch den Fluidverdrängungsmolch,
- Verdrängen von einem Fluid in einer Rohrleitung durch den Fluidverdrängungsmolch.

Die zuvor und die im Nachfolgenden beschrieben Verfahrensschritte können, wenn nicht explizit anderweitig angegeben, einzeln, zusammen, einfach, mehrfach, zeitlich parallel und/oder nacheinander in beliebiger Reihenfolge ausgeführt werden. Eine Benennung als beispielsweise "erster Verfahrensschritt" und "zweiter Verfahrensschritt" bedingt keine zeitliche Reihenfolge und/oder Priorisierung. Eine bevorzugte Reihenfolge der Verfahrensschritte sieht vor, dass die Verfahrensschritte in der aufgeführten Reihenfolge ausgeführt werden.

Das Aufblasen der zumindest abschnittsweise aufblasbaren Dichtvorrichtung erfolgt bevorzugt durch die Speichervorrichtung und/oder eine Mediumfördervorrichtung des Fluidverdrängungsmolchs. Das Aufblasen ist bevorzugt als Förderung von einem Medium in die aufblasbare Dichtvorrichtung zum zumindest abschnittsweise Vergrößern des Volumens der aufblasbaren Dichtvorrichtung zu verstehen, um eine Abdichtung durch die aufblasbare Dichtvorrichtung gegen die Rohrleitung zu ermöglichen. Die Speichervorrichtung und die Dichtvorrichtung sind bevorzugt fluidkommunizierend miteinander verbunden.

Der Fluidverdrängungsmolch ist insbesondere gemäß dem ersten Aspekt ausgestaltet, sodass sich bei dem beschriebenen Verdrängungsverfahren sämtliche Vorteile ergeben, die bereits zu dem Fluidverdrängungsmolch gemäß dem ersten Aspekt der Erfindung beschrieben worden sind.

Ein derart ausgestaltetes Verdrängungsverfahren ist besonders vorteilhaft, da durch den Fluidverdrängungsmolch ein Verdrängen von einem Fluid in der Rohrleitung und ein Abdichten des Fluidverdrängungsmolchs gegen die Rohrleitung besonders einfach ermöglicht wird.

Ein erfindungsgemäßer Fluidverdrängungsmolch und ein Verdrängungsverfahren werden nachfolgend anhand von Zeichnungen näher erläutert. Es zeigen jeweils schematisch:
- Figur 1: in einer geschnittenen Seitenansicht ein Fluidverdrängungsmolch mit einem Grundkörper in einer Rohrleitung,
- Figur 2: in einer geschnittenen Seitenansicht ein Fluidverdrängungsmolch mit zwei Grundkörpern in einer Rohrleitung, und
- Figur 3: in einem Flussdiagramm eine erfindungsgemäße Ausgestaltung des Verdrängungsverfahrens.

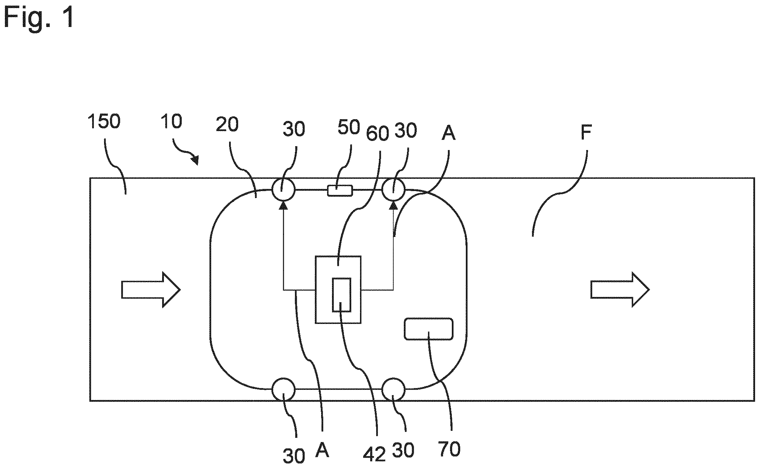

Elemente mit gleicher Funktion und Wirkungsweise sind in den Fig. 1 bis 3 jeweils mit denselben Bezugszeichen versehen.

In Fig. 1 ist schematisch in einer geschnittenen Seitenansicht ein Fluidverdrängungsmolch 10 mit einem Grundkörper 20 in einer Rohrleitung 150 gezeigt. Der Fluidverdrängungsmolch 10 ist zum Verdrängen 204 von einem Fluid F in einer Rohrleitung 150 und zum Abdichten des Fluidverdrängungsmolchs 10 gegen die Rohrleitung 150 ausgestaltet. Der Fluidverdrängungsmolch 10 umfasst den Grundkörper 20, zwei aufblasbare Dichtvorrichtung 30 zum Abdichten des Fluidverdrängungsmolchs 10 gegen die Rohrleitung 150 und eine Speichervorrichtung 60. Die Speichervorrichtung 60 ist zur Speicherung eines Dichtfluids A ausgestaltet und der Fluidverdrängungsmolch 10 ist zum Aufblasen 202 der Dichtvorrichtung 30 mit dem Dichtfluid A aus der Speichervorrichtung 60 ausgestaltet. Die zwei Dichtvorrichtungen 30 sind umlaufend an dem Grundkörper 20 und in einer Nut des Grundkörpers 20 angeordnet. Die zwei Dichtvorrichtungen 30 sind axial nebeneinander angeordnet. Der Fluidverdrängungsmolch 10 umfasst eine Mediumfördervorrichtung 42, wobei die Mediumfördervorrichtung 42 zur Förderung von dem Dichtfluid A aus der Speichervorrichtung 60 ausgestaltet ist und wobei die Mediumfördervorrichtung 42 zum Aufblasen 202 der Dichtvorrichtung 30 mit dem Dichtfluid A aus der Speichervorrichtung 60 ausgestaltet ist. Der Fluidverdrängungsmolch 10 umfasst eine Sensorvorrichtung 50 zwischen den zwei Dichtvorrichtungen 30, wobei die Sensorvorrichtung 50 zur Erfassung zumindest eines Messwerts innerhalb der Rohrleitung 150 ausgestaltet ist. Der Fluidverdrängungsmolch 10 umfasst eine Energievorrichtung 70, wobei die Energievorrichtung 70 zur Speicherung und zur Bereitstellung von Energie an den Fluidverdrängungsmolch 10, hier an die Mediumfördervorrichtung 42, ausgestaltet ist.

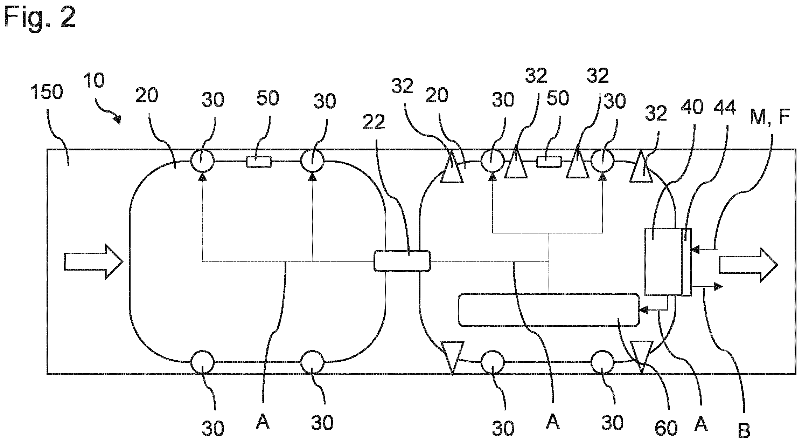

In Fig. 2 ist schematisch in einer geschnittenen Seitenansicht ein Fluidverdrängungsmolch 10 mit zwei Grundkörpern 20 in einer Rohrleitung 150 gezeigt. Jeder der zwei Grundkörper 20 umfasst zwei aufblasbare Dichtvorrichtungen 30 zur Abdichtung des Fluidverdrängungsmolchs 10 gegen die Rohrleitung 150. Die zwei Grundkörper 20 umfassen eine gemeinsame Speichervorrichtung 60, wobei die vier Dichtvorrichtungen 30 der zwei Grundkörper 20 jeweils mit der einen Speichervorrichtung 60 verbunden sind. Die zwei Grundkörper 20 sind mit einer Verbindungsvorrichtung 22 miteinander beweglich verbunden. Der Fluidverdrängungsmolch 10 umfasst zwei Sensorvorrichtungen 50, jeweils eine zwischen den zwei Dichtvorrichtungen 30 des jeweiligen Grundkörpers 20, wobei die Sensorvorrichtung 50 zur Erfassung zumindest eines Messwerts innerhalb der Rohrleitung 150 ausgestaltet ist. Der Fluidverdrängungsmolch 10 weist am rechten Grundkörper 20 zwei Dichtelement 32 auf, wobei die Dichtelemente 32 nicht aufblasbar, umlaufend an und in dem rechten Grundkörper 20 und mechanisch ausgestaltet sind. Der Fluidverdrängungsmolch 10 umfasst ferner eine Separationsvorrichtung 40, wobei die Separationsvorrichtung 40 zum Separieren von einem Medium M aus der Rohrleitung 150 ausgestaltet ist und zumindest eine Separationseinheit 44 zum Separieren des Mediums M aus der Rohrleitung 150 in zumindest zwei Medium-Bestandteile A, B umfasst, wobei ein Medium-Bestandteil dem Dichtfluid A entspricht. Das Dichtfluid A wird von der Separationsvorrichtung 40 der Speichervorrichtung 60 zugeführt.

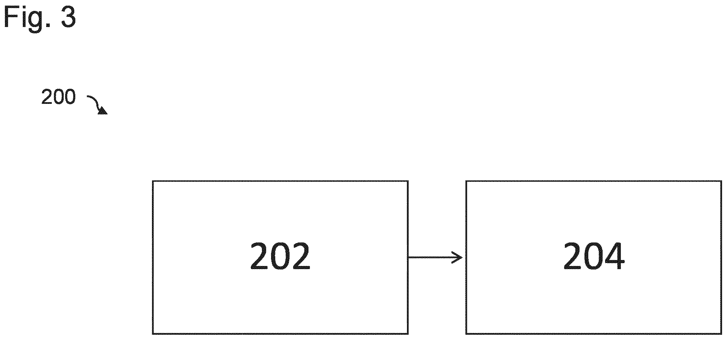

In Fig. 3 ist schematisch in einem Flussdiagramm eine erfindungsgemäße Ausgestaltung des Verdrängungsverfahrens 200 gezeigt. Für eine verbesserte Übersichtlichkeit sind in Fig. 3 nur die Bezugszeichen der Verfahrensschritte angegeben. Das Verdrängungsverfahren 200 umfasst in einem ersten Verfahrensschritt Aufblasen 202 einer aufblasbaren Dichtvorrichtung 30 des Fluidverdrängungsmolchs 10 mit einem Dichtfluid A aus einer Speichervorrichtung 60 des Fluidverdrängungsmolchs 10 zum Abdichten gegen die Rohrleitung 150 durch den Fluidverdrängungsmolch 10. Der Verdrängungsverfahren 200 umfasst in einem weiteren Verfahrensschritt das Verdrängen 204 von einem Fluid F in einer Rohrleitung 150 durch den Fluidverdrängungsmolch 10.

### Bezuaszeichenliste

- 10: Fluidverdrängungsmolch

- 20: Grundkörper
- 22: Verbindungsvorrichtung

- 30: Dichtvorrichtung
- 32: Dichtelement

- 40: Separationsvorrichtung
- 42: Mediumfördervorrichtung
- 44: Separationseinheit

- 50: Sensorvorrichtung

- 60: Speichervorrichtung

- 70: Energievorrichtung

- 150: Rohrleitung

- 200: Verdrängungsverfahren
- 202: Aufblasen
- 204: Verdrängen

- A: Dichtfluid
- B: Medium-Bestandteil
- F: Fluid
- M: Medium

## Patentansprüche

1. Fluidverdrängungsmolch (10) zum Verdrängen (204) von einem Fluid (F) in einer Rohrleitung (150) und zum Abdichten des Fluidverdrängungsmolchs (10) gegen die Rohrleitung (150), der Fluidverdrängungsmolch (10) umfassend einen Grundkörper (20), eine zumindest abschnittsweise aufblasbare Dichtvorrichtung (30) zum Abdichten des Fluidverdrängungsmolchs (10) gegen die Rohrleitung (150) und eine Speichervorrichtung (60), wobei die Speichervorrichtung (60) zur Speicherung eines Dichtfluids (A) ausgestaltet ist und wobei der Fluidverdrängungsmolch (10) zum Aufblasen (202) der Dichtvorrichtung (30) mit dem Dichtfluid (A) aus der Speichervorrichtung (60) ausgestaltet ist.

2. Fluidverdrängungsmolch (10) nach Anspruch 1,
**dadurch gekennzeichnet,**
**dass** die Dichtvorrichtung (30) umlaufend an dem Grundkörper (20) angeordnet ist und/oder zumindest abschnittsweise in einer Nut des Grundkörpers (20) angeordnet ist.

3. Fluidverdrängungsmolch (10) nach einem der vorangegangenen Ansprüche,
**dadurch gekennzeichnet,**
**dass** der Fluidverdrängungsmolch (10) zumindest zwei zumindest abschnittsweise aufblasbare Dichtvorrichtungen (30) umfasst, wobei die zumindest zwei Dichtvorrichtungen (30) durch den Fluidverdrängungsmolch (10) mit dem Dichtfluid (A) aus der Speichervorrichtung (60) aufblasbar sind und/oder wobei die zumindest zwei Dichtvorrichtungen (30) axial nebeneinander angeordnet sind.

4. Fluidverdrängungsmolch (10) nach einem der vorangegangenen Ansprüche,
**dadurch gekennzeichnet,**
**dass** der Fluidverdrängungsmolch (10) zumindest ein Dichtelement (32) umfasst, wobei das Dichtelement (32) nicht aufblasbar, umlaufend an und/oder in dem Grundkörper (20) und/oder mechanisch ausgestaltet ist.

5. Fluidverdrängungsmolch (10) nach einem der vorangegangenen Ansprüche,
**dadurch gekennzeichnet,**
**dass** der Fluidverdrängungsmolch (10) eine Mediumfördervorrichtung (42) umfasst, wobei die Mediumfördervorrichtung (42) zur Förderung von dem Dichtfluid (A) aus der und/oder in die Speichervorrichtung (60) ausgestaltet ist und/oder wobei die Mediumfördervorrichtung (42) zum Aufblasen (202) der Dichtvorrichtung (30) mit dem Dichtfluid (A) aus der Speichervorrichtung (60) ausgestaltet ist.

6. Fluidverdrängungsmolch (10) nach einem der vorangegangenen Ansprüche,
**dadurch gekennzeichnet,**
**dass** der Fluidverdrängungsmolch (10) eine Separationsvorrichtung (40) umfasst, wobei die Separationsvorrichtung (40) zum Separieren von einem Medium (M) aus der Rohrleitung (150) ausgestaltet ist und/oder zumindest eine Separationseinheit (44) zum Separieren des Mediums (M) aus der Rohrleitung (150) in zumindest zwei Medium-Bestandteile (A, B) umfasst, insbesondere wobei ein Medium-Bestandteil dem Dichtfluid (A) entspricht.

7. Fluidverdrängungsmolch (10) nach einem der vorangegangenen Ansprüche,
**dadurch gekennzeichnet,**
**dass** der Fluidverdrängungsmolch (10) zumindest zwei Grundkörper (20) umfasst, wobei jeder der zumindest zwei Grundkörper (20) zumindest eine zumindest abschnittsweise aufblasbare Dichtvorrichtung (30) zur Abdichtung des Fluidverdrängungsmolchs (10) gegen die Rohrleitung (150) umfasst, wobei jeder Grundkörper (20) eine Speichervorrichtung (60) umfasst oder wobei die zumindest zwei Grundkörper (20) eine gemeinsame Speichervorrichtung (60) umfassen, wobei die Dichtvorrichtungen (30) jeweils mit der zumindest einen Speichervorrichtung (60) verbunden sind.

8. Fluidverdrängungsmolch (10) nach Anspruch 7,
**dadurch gekennzeichnet,**
**dass** die zumindest zwei Grundkörper (20) mit zumindest einer Verbindungsvorrichtung (22) miteinander beweglich verbunden sind.

9. Fluidverdrängungsmolch (10) nach einem der vorangegangenen Ansprüche,
**dadurch gekennzeichnet,**
**dass** der Fluidverdrängungsmolch (10) zumindest eine Sensorvorrichtung (50) umfasst, wobei die Sensorvorrichtung (50) zur Erfassung zumindest eines Messwerts innerhalb der Rohrleitung (150) ausgestaltet ist.

10. Fluidverdrängungsmolch (10) nach einem der vorangegangenen Ansprüche,
**dadurch gekennzeichnet,**
**dass** der Fluidverdrängungsmolch (10) zumindest eine Energievorrichtung (70) umfasst, wobei die Energievorrichtung (70) zur Speicherung und/oder zur Bereitstellung von Energie an den Fluidverdrängungsmolch (10) ausgestaltet ist.

11. Fluidverdrängungsmolch (10) nach einem der vorangegangenen Ansprüche,
**dadurch gekennzeichnet,**
**dass** der Fluidverdrängungsmolch (10), insbesondere der Grundkörper (20), die Dichtvorrichtung (30) und/oder das Dichtelement (32), eine Gleitvorrichtung und/oder eine Führungsvorrichtung zum Gleiten und/oder Führen des Fluidverdrängungsmolchs (10) innerhalb der Rohrleitung (150) umfasst.

12. Verdrängungsverfahren (200) zum Verdrängen (204) von einem Fluid (F) in einer Rohrleitung (150) durch einen Fluidverdrängungsmolch (10) und zum Abdichten des Fluidverdrängungsmolchs (10) gegen die Rohrleitung (150), insbesondere nach einem der vorangegangenen Ansprüche, das Verdrängungsverfahren (200) umfassend:
- Aufblasen (202) einer zumindest abschnittsweise aufblasbaren Dichtvorrichtung (30) des Fluidverdrängungsmolchs (10) mit einem Dichtfluid (A) aus einer Speichervorrichtung (60) des Fluidverdrängungsmolchs (10) zum Abdichten gegen die Rohrleitung (150) durch den Fluidverdrängungsmolch (10),
- Verdrängen (204) von einem Fluid (F) in einer Rohrleitung (150) durch den Fluidverdrängungsmolch (10).
